(19) Europäisches Patentamt / European Patent Office / Office européen des brevets

(11) **EP 4 432 387 A1**

(12) **EUROPEAN PATENT APPLICATION**
published in accordance with Art. 153(4) EPC

(43) Date of publication:
**18.09.2024 Bulletin 2024/38**

(21) Application number: **21963694.1**

(22) Date of filing: **15.11.2021**

(51) International Patent Classification (IPC):
*H01M 4/13* [(2010.01)]    *H01M 10/0525* [(2010.01)]

(52) Cooperative Patent Classification (CPC):
Y02E 60/10

(86) International application number:
**PCT/CN2021/130627**

(87) International publication number:
**WO 2023/082247 (19.05.2023 Gazette 2023/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• LIU, Mingju
  Ningde, Fujian 352100 (CN)
• LI, Yajie
  Ningde, Fujian 352100 (CN)
• ZHANG, Qingwen
  Ningde, Fujian 352100 (CN)

(74) Representative: **Icosa**
  **83 avenue Denfert-Rochereau**
  **75014 Paris (FR)**

(54) **ELECTRODE AND PREPARATION METHOD THEREFOR, ELECTROCHEMICAL DEVICE, AND ELECTRONIC DEVICE**

(57)    This application proposes an electrode and a preparation method thereof, an electrochemical apparatus, and an electronic apparatus. The electrode includes a current collector and an active material layer located on one side or two sides of the current collector. The active material layer includes a first region and a second region, and in a thickness direction of the electrode, the first region is located between the current collector and the second region. The first region is from a current collector side to 2/3 of thickness of the active material layer, and the second region is from 2/3 of thickness of the active material layer to a surface of the electrode. Results of thermogravimetric analysis performed on the active material layer in an inert atmosphere at a temperature rise rate of 10°C/min show that a difference in the numbers of thermal weight loss peaks between the first region and the second region at 200°C to 800°C is ≥ 1. This indicates that the second region of the active material layer in this application has good conductivity, allowing ions and electrons to pass through the second region to the first region, thereby improving the overall conductivity of the electrode. This is conducive to increasing the capacity and energy density of the electrochemical apparatus using the electrode.

FIG. 1

EP 4 432 387 A1

**Description**

**TECHNICAL FIELD**

This application relates to the field of electrochemical energy storage, and in particular, to an electrode and a preparation method thereof, an electrochemical apparatus, and an electronic apparatus.

**BACKGROUND**

Electrochemical apparatuses such as lithium-ion batteries have advantages such as high energy density, high power, and long cycle life, and are widely used in various fields. With the development of technologies, increasingly high requirements are imposed on energy density of electrochemical apparatuses. To increase the energy density of electrochemical apparatuses, some technologies focus on increasing the capacity or voltage of active materials, while some technologies increase the content of active materials per unit volume and reduce the content of inactive materials. Reducing the thickness of the current collector or separator, lowering the percentage of inactive materials in the formulation, and preparing thicker electrodes can all reduce the percentage of inactive substances. However, in practical application, the thickness of the current collector and separator has already been reduced to near the limit. Therefore, only increasing the thickness of the electrode is possible. However, excessive increase in the thickness of the electrode may affect the performance of the electrochemical apparatus, so it is not feasible to significantly increase the thickness of the electrode. Therefore, how thickness of electrodes is increased as much as possible to increase capacity of electrochemical apparatuses while ensuring the performance of electrochemical apparatuses is an urgent problem to be solved.

**SUMMARY**

Some embodiments of this application provide an electrode and a preparation method thereof, an electrochemical apparatus, and an electronic apparatus, where results of thermogravimetric analysis performed on an active material layer in an inert atmosphere at a temperature rise rate of 10°C/min show that a difference in the numbers of thermal weight loss peaks between a first region and a second region is $\geq 1$. This can improve the conductivity of the second region of the active material layer, conducive to increasing the thickness of the active material layer so as to increase the energy density of the electrochemical apparatus.

Some embodiments of this application propose an electrode including a current collector and an active material layer located on one side or two sides of the current collector. The active material layer includes a first region and a second region, and in a thickness direction of the electrode, the first region is located between the current collector and the second region. The first region is from a current collector side to 2/3 of thickness of the active material layer, and the second region is from 2/3 of thickness of the active material layer to a surface of the electrode. Results of thermogravimetric analysis performed on the active material layer in an inert atmosphere at a temperature rise rate of 10°C/min show that a difference in the numbers of thermal weight loss peaks between the first region and the second region at 200°C to 800°C is $\geq 1$. This indicates that the conductivity of the second region is superior to the conductivity of the first region, thereby facilitating transport of electrons.

In some embodiments of this application, the results of the thermogravimetric analysis performed on the active material layer in an inert atmosphere at a temperature rise rate of 10°C/min show that the number of weight loss peaks of the first region at 200°C to 800°C is not less than 1 and the number of weight loss peaks of the second region at 200°C to 800°C is 0 to 2. This indicates that the second region of the active material layer in this application has good conductivity, thereby facilitating increase of the thickness of the electrode. This is conducive to increasing the capacity and energy density of the electrochemical apparatus.

In some embodiments of the application, the results of the thermogravimetric analysis show that a mass change of the first region at 200°C to 800°C is 0.21% to 13%; and the results of the thermogravimetric analysis show that a mass change of the second region at 200°C to 800°C is 0% to 2.4%. This indicates that the content of a polymer compound in the second region of the active material layer in this application is zero or extremely low. This is conducive to improving the iron and electron conduction in the second region of the active material layer, allowing ions and electrons to migrate to the first region of the active material layer, thereby improving the overall conductivity. In some embodiments, the polymer compound is a binder and/or a thickener. In some embodiments of this application, the results of the thermogravimetric analysis show that a mass change of the first region at 200°C to 800°C is 1.6% to 4.02%.

In some embodiments of this application, the electrode is a positive electrode or a negative electrode. In some embodiments, the electrode is a negative electrode, the active material layer is a negative electrode active material layer, and the current collector is a negative electrode current collector. In some embodiments, compacted density $\rho_1$ of the negative electrode active material layer satisfies $\rho_1 \geq 0.6$ g/cm$^3$, where a high compacted density is conducive to increasing the energy that can be stored in the electrochemical apparatus per unit volume. In some embodiments, thickness $h_1$ of the negative electrode active material layer on one side of the negative electrode current collector satisfies $h_1 \geq 10\mu m$, where a large thickness is conducive to carrying more active materials, thereby increasing the energy density of the electrochemical apparatus. In some embodiments, the negative electrode active material layer includes a negative electrode material, where the negative electrode material includes at least one of lithium titanate, silicon monoxide, graphite, silicon, or hard carbon.

In some embodiments of this application, the electrode is a negative electrode, the active material layer is a negative electrode active material layer, the current collector is a negative electrode current collector, and compacted density $\rho_1$ of the negative electrode active material layer satisfies: $1.85\ g/cm^3 \geq \rho_1 > 0.65\ g/cm^3$. This is conducive to increasing the energy density. In some embodiments, thickness $h_1$ of the negative electrode active material layer on one side of the negative electrode current collector satisfies: $1500\ \mu m \geq h_1 \geq 15\ \mu m$. This is conducive to preventing detachment of the negative electrode active material layer while increasing the energy density.

In some embodiments of this application, compacted density $\rho_1$ of the negative electrode active material layer satisfies: $1.83\ g/cm^3 \geq \rho_1 \geq 1.0\ g/cm^3$. In some embodiments of this application, thickness $h_1$ of the negative electrode active material layer on one side of the negative electrode current collector satisfies: $150\ \mu m \geq h_1 \geq 30\ \mu m$.

In some embodiments of this application, the electrode is a positive electrode, the current collector is a positive electrode current collector, the active material layer is a positive electrode active material layer, and compacted density $\rho_2$ of the positive electrode active material layer satisfies $\rho_2 \geq 2\ g/cm^3$. This is conducive to increasing the energy density. In some embodiments, thickness $h_2$ of the positive electrode active material layer on one side of the positive electrode current collector satisfies $h_2 \geq 20\ \mu m$. This is conducive to carrying more positive electrode materials to increase the capacity. In some embodiments, the positive electrode active material layer includes a positive electrode material, where the positive electrode material includes at least one of lithium iron phosphate, lithium nickel cobalt manganate, lithium manganate, lithium cobaltate, or lithium nickel cobalt aluminate.

In some embodiments of this application, the electrode is a positive electrode, the current collector is a positive electrode current collector, the active material layer is a positive electrode active material layer, and compacted density $\rho_2$ of the positive electrode active material layer satisfies $4.25\ g/cm^3 \geq \rho_2 \geq 2.3\ g/cm^3$. This is conducive to avoiding particle breakage while increasing the energy density. In some embodiments, thickness $h_2$ of the positive electrode active material layer on one side of the positive electrode current collector satisfies: $1500\ \mu m \geq h_2 \geq 30\ \mu m$, thereby avoiding detachment of the positive electrode active material layer from the current collector while increasing the battery capacity. In some embodiments of this application, the electrode is a positive electrode, the current collector is a positive electrode current collector, the active material layer is a positive electrode active material layer, and compacted density $\rho_2$ of the positive electrode active material layer satisfies $4.23\ g/cm^3 \geq \rho_2 > 4.0\ g/cm^3$. In some embodiments, thickness $h_2$ of the positive electrode active material layer on one side of the positive electrode current collector satisfies: $130\ \mu m > h_2 > 26\ \mu m$.

In some embodiments of this application, the active material layer includes a conductive agent, where a mass percentage of the conductive agent in the first region is represented by B, and a mass percentage of the conductive agent in the second region is represented by A, A being greater than B, thereby improving the conductivity of the second region and allowing ions and electrons to migrate to the first region. In some embodiments, a mass percentage of the conductive agent in the first region is represented by B, and a mass percentage of the conductive agent in the second region is represented by A, satisfying $(A - B)/B \geq 20\%$. In some embodiments, the conductive agent includes at least one of carbon nanotubes, carbon fiber, acetylene black, graphene, Ketjen black, or conductive carbon black. In some embodiments, based on a total mass of the active material layer, a mass percentage of the conductive agent in the active material layer is 0% to 2%.

In some embodiments of this application, the first region includes a polymer compound, and the polymer compound includes at least one of polyethylene oxide, polypropylene oxide, polyvinylidene fluoride, polytetrafluoroethylene, polyacrylonitrile, polyimide, polysiloxane, polyacrylic acid, polypropylene derivative, sodium carboxymethyl cellulose, lithium carboxymethyl cellulose, polymethylpyrrolidone, polyvinylpyrrolidone, styrene acrylate, or styrene butadiene rubber. In some embodiments, a mass percentage of the polymer compound in the active material layer is 0.42% to 14%. In some embodiments, a mass percentage of the polymer compound in the active material layer is 2.0% to 5.0%.

Some embodiments of this application propose a preparation method of electrode. The method can be used for preparing any electrode in this application and includes: applying a slurry of the active material layer on at least one surface of the current collector, and performing drying and cold pressing to obtain an initial electrode; and performing treatment on the initial electrode to obtain the electrode; where the performing treatment on the initial electrode includes: performing plasma treatment on the initial electrode in a vacuum environment, where plasma power is 0.5 kW to 5 kW, a gas source includes at least one of nitrogen, argon, or carbon tetrafluoride, a gas flow rate is 3000 sccm to 5000 sccm, a temperature is 20°C to 60°C, and a treatment time is 0.5 min to 1 min; or performing heat treatment on the initial electrode in a vacuum or inert gas environment, where a heat treatment temperature is higher than 200°C, and a heat treatment time is 1 min to 3 min; or performing laser ablation on the initial electrode in a vacuum or inert gas environment, where a laser intensity is 30 W to 100 W, and a treatment time is 0.5s to 1s.

Some embodiments of this application propose a preparation method of electrode. The method can be used for preparing any electrode in this application and includes: applying a slurry of the active material layer on at least one surface of the current collector, and performing drying and cold pressing to obtain an initial electrode; and performing treatment on the initial electrode to obtain the electrode; where the performing treatment on the initial electrode includes: performing heat treatment on the initial electrode in a vacuum or inert gas environment, where a heat treatment temperature is 350°C to 600°C, and a heat treatment time is 1 min to 3 min. Some embodiments of this application propose an electrochemical apparatus including an electrode; where the electrode is the electrode according to any embodiment of this application; or the electrode is an electrode prepared by using the preparation method proposed in this application.

Some embodiments of this application propose an electronic apparatus including the electrochemical apparatus proposed in this application.

The electrode proposed in some embodiments of this application includes a current collector and an active material layer located on one side or two sides of the current collector. The active material layer includes a first region and a second region, and the first region is located between the current collector and the second region. The first region is from a current collector side to 2/3 of thickness of the active material layer in the thickness direction, and the second region is from 2/3 of thickness of the active material layer to a surface of the electrode in the thickness direction. Results of thermogravimetric analysis performed on the active material layer in an inert atmosphere at a temperature rise rate of 10°C/min show that a difference in the numbers of thermal weight loss peaks between the first region and the second region at 200°C to 800°C is ≥ 1. This indicates that the second region of the active material layer in this application has good conductivity, allowing ions and electrons to pass through the second region to the first region, thereby improving the overall conductivity of the electrode. This is conducive to increasing the thickness of the electrode and in turn increasing the capacity and energy density of the electrochemical apparatus using the electrode.

**BRIEF DESCRIPTION OF DRAWINGS**

With reference to the accompanying drawings and specific embodiments below, the above and other features, advantages, and aspects of some embodiments of this application will become more apparent. Throughout the drawings, the same or similar reference signs indicate same or similar elements. It should be understood that the drawings are exemplary and that the components and elements are not necessarily drawn to scale.

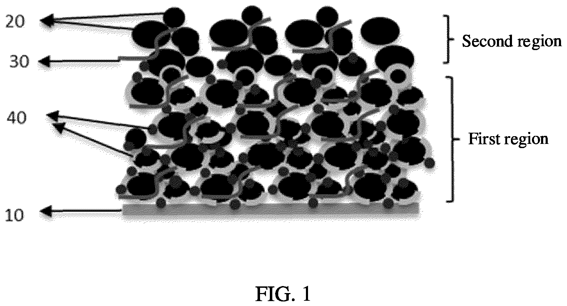

FIG. 1 is a schematic diagram of an electrode according to an embodiment of this application.

**DESCRIPTION OF EMBODIMENTS**

The following embodiments can help those skilled in the art to understand this application more comprehensively but do not limit this application in any manner.

In order to increase the energy density of an electrochemical apparatus, some technologies involve increasing thickness of the active material layer in the electrode to increase the energy density of the electrochemical apparatus. However, increasing the thickness of the active material layer in the electrode may deteriorate the conductivity of the active material layer due to excessive thickness of the active material layer. To improve the conductivity of the active material layer, some technologies adopt a structure of multiple active material layers. However, the complex process of composite cold pressing of a structure containing multiple single layers cannot avoid changes in the original compacted density and porosity of each single layer during a subsequent cold pressing process. Additionally, the bonding between layers may become loose, leading to delamination, affecting the transport of electrons and ions, and deteriorating the cycling performance. In some other technologies, laser punching is used for perforating the active material layer. However, laser punching exhibits low efficiency and high costs, and may result in energy density loss during the perforation process. In some other technologies, a pore-forming agent solution is applied on a surface of the electrode. However, this cannot avoid dissolution of the surface of the electrode. In addition, depth of the pores formed by the pore-forming agent is limited, providing limited improvement on a side near the current collector. Through different methods, the foregoing technologies address the issue of ion transport from an electrolyte to a surface of the active material. However, the ion transport from the surface of the active material to the interior of the active material layer remains unchanged and the hindrance to ion transport still exists, so the improvement effect is not desirable.

Some embodiments of this application provide an electrode, so as to improve the conductivity of the active material layer of the electrode, thereby conducive to increasing the energy density of an electrochemical apparatus. The electrode in some embodiments of this application may be an electrode of an electrochemical apparatus, where the electrode includes a current collector and an active material layer located on one side or two sides of the current collector. The active material layer includes a first region and a second region, and in a thickness direction of the electrode, the first region is located between the current collector and the second region. The first region is from a current collector side to 2/3 of thickness of the active material layer, and the second region is from 2/3 of thickness of the active material layer to a surface of the electrode. Results of thermogravimetric analysis performed on the active material layer in an inert atmosphere at a temperature rise rate of 10°C/min show that a difference in the numbers of thermal weight loss peaks between the first region and the second region at 200°C to 800°C is $\geq 1$. In some embodiments, thickness of the first region accounts for 2/3 of the total thickness of the active material layer, thickness of the second region accounts for 1/3 of the total thickness of the active material layer, and the number of weight loss peaks of the second region is less than the number of weight loss peaks of the first region, indicating that the second region contains fewer types or less amount of polymer compound compared to the first region. This is conducive to ensuring the conductivity of the second region, thereby facilitating the transport of electrons through the second region to the first region, consequently improving the overall conductivity of the electrode plate.

In some embodiments of this application, the results of the thermogravimetric analysis performed on the active material layer in an inert atmosphere at a temperature rise rate of 10°C/min show that the number of weight loss peaks of the first region at 200°C to 800°C is not less than 1 and the number of weight loss peaks of the second region at 200°C to 800°C is 0 to 2. In some embodiments, the second region is located on a side of the first region away from the current collector, and the migrating ions and electrons needs to pass through the second region, so the conductivity of the second region has a significant influence on the conductivity of the electrode. In these embodiments of this application, the number of weight loss peaks of the second region is 0 to 2 in the range of 200°C to 800°C, which indicates that the second region contains no polymer compound or extremely low content of polymer compound, such as a polymer thickener and binder. This avoids the influence of a polymer compound in the active material layer on the conductivity of the second region of the active material layer, thereby improving the overall conductivity performance of the active material layer for ions and electrons. As a result, when the thickness of the active material layer is increased to increase the energy density of the electrochemical apparatus, the good conductivity of the active material layer guarantees that the electronic performance of the electrochemical apparatus will not deteriorate due to increased thickness of the active material layer. In addition, in this application, the number of weight loss peaks of the first region of the active material layer at 200°C to 800°C is not less than 1. This indicates that the first region of the active material layer in this application contains a polymer compound. This is because a polymer compound is needed in the active material layer to bind the materials in the active material layer together and make them attached between current collectors. It can be learned that for an electrochemical apparatus proposed in some embodiments of this application, the good conductivity of the active material layer contributes to the performance of the electrochemical apparatus and is conducive to increasing the energy density. In addition, thicknesses of the first region and the second region are limited in this application because if thickness of the second region is too small, improvement in the conductivity of the active material layer may not be significant; while if thickness of the second region is too large, it may cause the active material layer to detach during rolling. If thickness of the first region is too small, it may lead to insufficient overall capacity of the active material layer; while if thickness of the first region is too large, it may result in inadequate adhesion between the active material layer and the current collector, making it difficult to support the active material layer.

In some embodiments of this application, the results of the thermogravimetric analysis show that a mass change of the first region at 200°C to 800°C is 0.21% to 13%. In some embodiments, the results of the thermogravimetric analysis show that a mass change of the second region at 200°C to 800°C is 0% to 2.4%. In some embodiments, the detection accuracy of a thermogravimetric analysis device is 0.2%. In these embodiments, the mass change of the second region of the active material layer at 200°C to 800°C is relatively low. This indicates that the content of polymer compound in the second region of the active material layer in this application is zero or extremely low, which is conducive to improving the transport of ions and electrons in the second region of the active material layer. This is conducive to improving the electronic performance of the electrochemical apparatus. Meanwhile, the content of polymer compound in the first region is not zero, which is conducive to guaranteeing the overall cohesion of the active material layer and the adhesion between the active material layer and the current collector. In some embodiments, the results of the thermogravimetric analysis show that a mass change of the first region at 200°C to 800°C is 1.6% to 4.02%. In some embodiments, the polymer compound is a binder and/or thickener, and the content of the binder and/or thickener in the second region is almost zero to guarantee conductivity.

In some embodiments of this application, the electrode is a negative electrode or a positive electrode and may be a negative electrode or a positive electrode of an electrochemical apparatus. In some embodiments, the electrode is a negative electrode, the active material layer is a negative electrode active material layer, the current collector is a negative electrode current collector and may be copper foil, aluminum foil, steel foil, or the like. This is not limited herein. In some embodiments, compacted density $\rho_1$ of the negative electrode active material layer satisfies $\rho_1 \geq 0.6$ g/cm$^3$, where higher compacted density indicates that a greater mass of active material layer is carried per unit volume of the electrode. Greater mass of the negative electrode active material layer is conducive to increasing the energy stored by the electrochemical apparatus per unit volume, thereby increasing energy density. In some embodiments, compacted density $\rho_1$ of the active material layer satisfies: 1.85 g/cm$^3$ $\geq \rho_1 \geq 0.65$ g/cm$^3$. In some embodiments, 1.83 g/cm$^3$ $\geq \rho_1 \geq 1.0$ g/cm$^3$. This is conducive to increasing the energy density of the electrochemical apparatus. In some embodiments, with the compacted density of the negative electrode active material layer limited to not less than 1.0 g/cm$^3$, the energy

density of the electrochemical apparatus can be further guaranteed; while the compacted density of the negative electrode active material layer being limited to not greater than 1.83 g/cm$^3$ can prevent excessive compacted density, which otherwise may lead to particle breakage in the active material layer, increasing electrolyte consumption and deteriorating cycling performance.

In some embodiments of this application, thickness $h_1$ of the negative electrode active material layer on one side of the negative electrode current collector satisfies: $h_1 \geq 10\ \mu m$. In some embodiments, a thicker negative electrode active material layer is conducive to increasing a percentage of the negative electrode active material layer in the electrochemical apparatus, thereby increasing the energy density of the electrochemical apparatus. In some embodiments of this application, thickness $h_1$ of the negative electrode active material layer on one side of the negative electrode current collector satisfies: $1500\ \mu m \geq h_1 \geq 15\ \mu m$. In some embodiments, $150\ \mu m \geq h_1 \geq 30\ \mu m$. With the thickness of the negative electrode active material layer limited to not less than $30\ \mu m$, the thickness of the negative electrode active material layer can be guaranteed, thereby increasing the overall energy density of the electrochemical apparatus. The thickness of the negative electrode active material layer being limited to not greater than $150\ \mu m$ can prevent the negative electrode active material layer from being too thick, which otherwise may cause the problem of detachment of the negative electrode active material layer from the current collector.

In some embodiments of this application, the negative electrode active material layer includes a negative electrode material, where the negative electrode material includes at least one of lithium titanate, silicon monoxide, graphite, or hard carbon.

In some embodiments of this application, the electrode is a positive electrode, the current collector is a positive electrode current collector, the active material layer is a positive electrode active material layer, and compacted density $\rho_2$ of the positive electrode active material layer satisfies $\rho_2 \geq 2$ g/cm$^3$. Limiting the compacted density of the positive electrode active material layer can increase the energy density. Optionally, the compacted density $\rho_2$ of the positive electrode active material layer satisfies $4.25$ g/cm$^3 \geq \rho_2 \geq 2.3$ g/cm$^3$. In some embodiments, $4.23$ g/cm$^3 \geq \rho_2 \geq 4.0$ g/cm$^3$. Further limiting the compacted density of the positive electrode active material layer can further increase the energy density and prevent the problem of material particle breakage caused by excessively high compacted density and the problem of insufficient electrolyte infiltration.

In some embodiments in this application, thickness $h_2$ of the positive electrode active material layer on one side of the positive electrode current collector satisfies $h_2 > 20\ \mu m$. In some embodiments, increasing thickness of the positive electrode active material on one side of the positive electrode current collector can allow the positive electrode to carry more active material, thereby increasing capacity. In some embodiments, thickness $h_2$ of the positive electrode active material layer on one side of the positive electrode current collector satisfies: $1500\ \mu m \geq h_2 \geq 30\ \mu m$. In some embodiments, $130\ \mu m \geq h_2 \geq 26\ \mu m$. Further limiting thickness of the positive electrode active material layer can prevent detachment of the positive electrode active material layer from the positive electrode current collector due to excessive thickness of the positive electrode active material layer while increasing capacity.

In some embodiments of this application, the positive electrode active material layer includes a positive electrode material, where the positive electrode material includes at least one of lithium iron phosphate, lithium nickel cobalt manganate, lithium manganate, lithium cobaltate, or lithium nickel cobalt aluminate. The positive electrode material may include a combination of two or more of the foregoing positive electrode materials.

In some embodiments of this application, the active material layer includes a conductive agent, where a mass percentage of the conductive agent in the first region is represented by B, and a mass percentage of the conductive agent in the second region is represented by A, A being greater than B. In some embodiments, the second region is located on a side of the first region away from the current collector, therefore the content of the conductive agent in the second region is increased to improve the conductivity and promote the transport of ions and electrons into the interior of the active material layer.

In some embodiments of this application, a mass percentage of the conductive agent in the first region is represented by B, and a mass percentage of the conductive agent in the second region is represented by A, satisfying $(A-B)/B \geq 20\%$. In some embodiments, the mass percentage of the conductive agent in the second region is obviously higher than the mass percentage of the conductive agent in the second region. The second region is closer to the outside of the active material layer, and the transport paths of ions and electrons need to pass through the second region, therefore when the mass percentage of the conductive agent in the second region is more than 20% higher than the mass percentage of the conductive agent in the first region, the conductivity of the first region can be guaranteed.

In some embodiments of this application, the conductive agent includes at least one of carbon nanotubes, carbon fiber, acetylene black, graphene, Ketjen black, or conductive carbon black. In some embodiments of this application, based on a total mass of the active material layer, a mass percentage of the conductive agent in the active material layer is 0% to 2%. The carbon nanotubes in the conductive agent may be single-walled carbon nanotubes or multi-walled carbon nanotubes, which can increase long-range transport of electrons.

In some embodiments of this application, the first region includes a polymer compound, where the polymer compound may include a binder and/or thickener, and the polymer compound includes at least one of polyethylene oxide, polypropylene oxide, polyvinylidene fluoride, polytetrafluoroethylene, polyacrylonitrile, polyimide, polysiloxane, polyacrylic acid, polypropylene derivative, sodium carboxymethyl cellulose, lithium carboxymethyl cellulose, polymethylpyrrolidone, polyvinylpyrrolidone, styrene acrylate, or styrene butadiene rubber.

In some embodiments of this application, a mass percentage of the polymer compound in the active material layer is 0.42% to 14%. In some embodiments, a mass percentage of the polymer compound in the active material layer is 2.0% to 5.0%. Excessively low mass percentage of polymer compound may lead to insufficient attachment force between the active material layer and the current collector, while excessively high mass percentage of adhesion may affect the conductivity of the active material layer.

In some embodiments of this application, the polymer compound is distributed on the surface of the active material (such as the negative electrode material) of the active material layer in dots or planes, and is subjected to aggregation on the surface of the active material or between the particles of the active material, so an exposed area of the active material is large. This causes a minimum hindrance to the transport of electrons and ions and is conducive to guaranteeing conductivity.

In some embodiments of this application, referring to FIG. 1, the electrode includes a current collector 10 and an active material layer, where the active material layer includes a first region and a second region. The active material layer includes an active material 20 (which may be a positive electrode material or a negative electrode material), a conductive agent 30, and a polymer compound 40, where the active material 20 may include a first active material and a second active material, a particle size of the first active material is larger than a particle size of the second active material, and the active materials with different particle sizes are adapted to each other, thus fully filling the gaps.

In some embodiments of this application, the mass percentage of the conductive agent in the second region is increased to improve the transport of electrons in the second region; and the content of the polymer compound (such as a binder and/or a thickener) in the second region is reduced to reduce the hindrance to the transport of ions, so as to improve the electrode kinetics.

In some embodiments of this application, a preparation method of electrode is proposed. The method can be used for preparing any electrode in this application and includes: applying a slurry of the active material layer on at least one surface of the current collector, and performing drying and cold pressing to obtain an initial electrode; and performing treatment on the initial electrode to obtain the electrode; where the performing treatment on the initial electrode includes: performing plasma treatment on the initial electrode in a vacuum environment, where plasma power is 0.5 kW to 5 kW, a gas source includes at least one of nitrogen, argon, or carbon tetrafluoride, a gas flow rate is 3000 sccm to 5000 sccm, a temperature is 20°C to 60°C, and a treatment time is 0.5 min to 1 min; or performing heat treatment on the initial electrode in a vacuum or inert gas environment, where a heat treatment temperature is higher than 200°C, and a heat treatment time is 1 min to 3 min; or performing laser ablation on the initial electrode in a vacuum or inert gas environment, where a laser intensity is 30 W to 100 W, and a treatment time is 0.5s to 1s.

In some embodiments of this application, through the treatment on the initial electrode, the polymer compound in the second region on the surface of the active material layer of the initial electrode is removed, for example, the binder and/or thickener in the second region is removed, so that the prepared electrode has better conductivity, and a coverage area of the active material by the polymer compound is decreased. In addition, hindrance to transport of irons is reduced and the kinetic performance is improved. This is conducive to increasing the thickness of the active material layer without reducing the electrode performance.

In some embodiments of this application, a preparation method of the foregoing electrode is proposed, including: applying a slurry of the active material layer on at least one surface of the current collector, and performing drying and cold pressing to obtain an initial electrode; and performing treatment on the initial electrode to obtain the electrode; where the performing treatment on the initial electrode includes: performing heat treatment on the initial electrode in a vacuum or inert gas environment, where a heat treatment temperature is 350°C to 600°C, and a heat treatment time is 1 min to 3 min.

In some embodiments of this application, an electrochemical apparatus is proposed, including an electrode; where the electrode is any electrode in this application; or the electrode is an electrode prepared by using the preparation method proposed in this application.

The electrochemical apparatus in some embodiments of this application includes a positive electrode, a negative electrode, and a separator disposed between the positive electrode and the negative electrode. In some embodiments, both the negative electrode and the positive electrode may be any of the foregoing electrodes. In some embodiments, a current collector of the positive electrode may be Al foil, or certainly may be another current collector commonly used in the art.

In some embodiments, the separator includes at least one of polyethylene, polypropylene, polyvinylidene fluoride, polyethylene terephthalate, polyimide, or aramid. For example, polyethylene is at least one selected from high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, thickness of the separator ranges from approximately 5 $\mu$m to 50 $\mu$m.

In some embodiments, a surface of the separator may further include a porous layer. The porous layer is disposed on at least one surface of the separator. The porous layer includes inorganic particles and a binder. The inorganic particles are at least one selected from aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconia oxide ($Z_1O_2$), yttrium oxide ($Y_2O_3$), silicon carbide (SiC), boehmite, aluminum hydroxide, magnesium hydroxide, calcium hydroxide, or barium sulfate. In some embodiments, a pore diameter of the separator ranges from approximately 0.01 $\mu$m to 1 $\mu$m. The binder in the porous layer is at least one selected from polyvinylidene fluoride, vinylidene fluoride-hexafluoropropylene copolymer, polyamide, polyacrylonitrile, polyacrylate, polyacrylic acid, a polyacrylic salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical apparatus may be a wound or stacked electrochemical apparatus. In some embodiments, the positive electrode and/or the negative electrode of the electrochemical apparatus may be a multilayer structure formed through winding or lamination, or may be a single-layer structure formed by stacking a single positive electrode, a separator, and a single negative electrode.

In some embodiments, the electrochemical apparatus includes a lithium-ion battery but this application is not limited thereto. In some embodiments, the electrochemical apparatus may further include an electrolyte. The electrolyte may be one or more of a gel electrolyte, a solid electrolyte, and liquid electrolyte, and the liquid electrolyte includes a lithium salt and a non-aqueous solvent. The lithium salt is one or more selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, $LiPF_6$ is selected as the lithium salt because it has a high ionic conductivity and can improve cycling performance.

The non-aqueous solvent may be a carbonate compound, a carboxylate compound, an ether compound, another organic solvent, or a combination thereof. The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, $\gamma$-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments of this application, a lithium-ion battery is used as an example. A positive electrode, a separator, and a negative electrode are wound or stacked in sequence to form an electrode assembly, and the electrode assembly is then packaged, for example, in an aluminum-plastic film, followed by injection of an electrolyte, formation, and packaging, so that the lithium-ion battery is prepared. Then, a performance test is performed on the prepared lithium-ion battery.

Persons skilled in the art will understand that the preparation method of the electrochemical apparatus (for example, the lithium-ion battery) described above is merely an embodiment. Without departing from the content disclosed in this application, other methods commonly used in the art may be used.

An electronic apparatus is proposed in this application, including an electrochemical apparatus, where the electrochemical apparatus is any electrochemical apparatus in this application. The electronic apparatus in some embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, an unmanned aerial vehicle, a lighting appliance, a toy, a game console, a clock, an electric tool, a flash lamp, a camera, or a large household battery.

Some specific examples and comparative examples are listed below to better illustrate this application. Lithium-ion batteries are used for illustration.

Example 1

Preparation of positive electrode plate: A positive electrode material lithium cobaltate, polyvinylidene fluoride (PVDF), and carbon nanotubes (CNT) were mixed at a mass ratio of 97.5:1.5:1.0, and N-methylpyrrolidone (NMP) was added as a solvent to prepare a slurry. The slurry was well stirred to obtain a slurry of a positive electrode active material layer. The slurry was uniformly applied on an aluminum foil positive electrode current collector, and dried to obtain a positive electrode plate.

Preparation of negative electrode plate: A negative electrode material graphite, a conductive agent carbon nanotubes, and a binder (styrene acrylate and lithium carboxymethyl cellulose) were mixed at a preset mass ratio, and deionized water was added as a solvent to obtain a slurry of a negative electrode active material layer. A copper foil was used as a negative electrode current collector, and the slurry of the negative electrode active material layer was applied onto the negative electrode current collector and dried at 90°C. Then, heat treatment was performed on the dried electrode plate, where a heat treatment temperature was 350°C, and a heat treatment time was 2 min. A negative electrode plate was obtained after the heat treatment.

Preparation of separator: 8$\mu$m thick polyethylene (PE) was used as a separator.

Preparation of electrolyte: In an environment with a water content less than 10 ppm, lithium hexafluorophosphate and a non-aqueous organic solvent (a weight ratio of ethylene carbonate (EC), diethyl carbonate (DEC), propylene carbonate (PC), propyl propionate (PP), and vinylene carbonate (VC) was equal to 20:30:20:28:2) were mixed at a weight ratio of 8:92 to prepare an electrolyte.

Preparation of lithium-ion battery: The positive electrode plate, the separator, and the negative electrode plate were stacked in sequence, such that the separator was sandwiched between the positive electrode plate and the negative electrode plate for separation, and the stack was wound to obtain an electrode assembly. The electrode assembly was put in an outer package aluminum-plastic film, and was dehydrated at 80°C. Then, the foregoing electrolyte was injected and packaging was performed, followed by processes such as formation, degassing, and trimming to obtain a lithium-ion battery.

Relevant parameters of example 1 were as follows: The positive electrode active material layer included lithium cobaltate, PVDF, and CNT, with mass percentages of 97.5%, 1.5% and 1%, respectively. Thickness of the positive electrode active material layer on one side of the positive electrode current collector was 63 $\mu$m, and compacted density of the positive electrode active material layer on one side of the positive electrode current collector was 4.1 g/cm$^3$. The negative electrode active material layer included graphite, styrene acrylate, lithium carboxymethyl cellulose, and CNT, with mass percentages of 97.4%, 1%, 1%, and 0.6%, respectively. Compacted density of the negative electrode active material layer was 1.74g/cm$^3$, thickness of the negative electrode active material layer on one side of the negative electrode current collector was 75 $\mu$m. The negative electrode material was graphite. Thickness of a first region of the negative electrode active material layer was 50 $\mu$m, and thickness of a second region of the negative electrode active material layer was 25 $\mu$m. A mass percentage A of a conductive agent in the second region of the negative electrode was 0.6%, and a mass percentage B of the conductive agent in the first region of the negative electrode was 0.4%. The conductive agent in the negative electrode was carbon nanotubes. A binder in the first region of the negative electrode was styrene acrylate. A mass percentage of the binder in the first region of the negative electrode was 2.5%. The number of thermogravimetric weight loss peaks in the first region of the negative electrode active material layer at 200°C to 800°C was 1. A mass change in the first region of the negative electrode was 1.6%. The number of thermogravimetric weight loss peaks in the second region of the negative electrode active material layer at 200°C to 800°C was 0. A mass change in the second region of the negative electrode was 0.1%.

For other examples 2 to 36, parameters were changed based on the steps in example 1. Specific changed parameters are shown in the following tables.

Example 37

Preparation of positive electrode plate: A positive electrode material lithium cobaltate, polyvinylidene fluoride (PVDF), and carbon nanotubes (CNT) were mixed at a mass ratio of 97.5:1.5:1.0, and N-methylpyrrolidone (NMP) was added as a solvent to prepare a slurry. The slurry was well stirred to obtain a slurry of a positive electrode active material layer. The slurry was uniformly applied on an aluminum foil positive electrode current collector and dried at 90°C. Then, heat treatment was performed on the dried electrode plate, where a heat treatment temperature was 350°C, and a heat treatment time was 2 min. A positive electrode plate was obtained after the heat treatment.

Preparation of negative electrode plate: A negative electrode material graphite, a conductive agent carbon nanotubes, and a binder (styrene acrylate and lithium carboxymethyl cellulose) were mixed at a preset mass ratio, and deionized water was used as a solvent to obtain a slurry of a negative electrode active material layer. A copper foil was used as a negative electrode current collector, and the slurry of the negative electrode active material layer was applied onto the negative electrode current collector and dried at 90°C to obtain a negative electrode plate.

The rest steps of example 37 were the same as in example 1.

Relevant parameters of example 37 were as follows: The positive electrode active material layer included lithium cobaltate, PVDF, and CNT, with mass percentages of 97.5%, 1.5% and 1%, respectively. Thickness of the positive electrode active material layer on one side of the positive electrode current collector was 63 $\mu$m, and compacted density of the positive electrode active material layer on one side of the positive electrode current collector was 4 g/cm$^3$. Thickness of a first region of the positive electrode active material layer was 42 $\mu$m, and thickness of a second region of the positive electrode active material layer was 21 $\mu$m. A mass percentage A of a conductive agent in the second region of the positive electrode was 1%, and a mass percentage B of the conductive agent in the first region of the positive electrode was 0.67%. The conductive agent in the positive electrode was carbon nanotubes. A binder in the first region of the positive electrode was PVDF. A mass percentage of the binder in the first region of the positive electrode was 1.5%. The number of thermogravimetric weight loss peaks in the first region of the positive electrode active material layer at 200°C to 800°C was 1. A mass change in the first region of the positive electrode was 1.2%. The number of thermogravimetric weight loss peaks in the second region of the positive electrode active material layer at 200°C to 800°C was 0. A mass change in the second region of the positive electrode was 0.1%.

The negative electrode active material layer included graphite, styrene acrylate, lithium carboxymethyl cellulose, and CNT, with mass percentages of 97.4%, 1%, 1% and 0.6%, respectively. Compacted density of the negative electrode active material layer was 1.74 g/cm$^3$. Thickness of the negative electrode active material layer on one side of the negative electrode current collector was 73 $\mu$m. The negative electrode material was graphite.

For other examples 38 to 48, parameters were changed based on the steps in example 34. Specific changed parameters are shown in the following tables.

Example 49

Preparation of positive electrode plate: A positive electrode material lithium cobaltate, polyvinylidene fluoride (PVDF), and carbon nanotubes (CNT) were mixed at a mass ratio of 97.5:1.5:1.0, and N-methylpyrrolidone (NMP) was added as a solvent to prepare a slurry. The slurry was well stirred to obtain a slurry of a positive electrode active material layer. The slurry was uniformly applied on an aluminum foil positive electrode current collector and dried at 90°C. Then, heat treatment was performed on the dried electrode plate, where a heat treatment temperature was 350°C, and a heat treatment time was 2 min. A positive electrode plate was obtained after the heat treatment.

Preparation of negative electrode plate: A negative electrode material graphite, a conductive agent carbon nanotubes, and a binder (styrene acrylate and lithium carboxymethyl cellulose) were mixed at a preset mass ratio, and deionized water was added as a solvent to obtain a slurry of a negative electrode active material layer. A copper foil was used as a negative electrode current collector, and the slurry of the negative electrode active material layer was applied onto the negative electrode current collector and dried at 90°C. Then, heat treatment was performed on the dried electrode plate, where a heat treatment temperature was 350°C, and a heat treatment time was 2 min. A negative electrode plate was obtained after the heat treatment.

The rest steps of example 49 were the same as in example 1.

Relevant parameters of example 49 were as follows: The positive electrode active material layer included lithium cobaltate, PVDF, and CNT, with mass percentages of 97.5%, 1.5% and 1%, respectively. Thickness of the positive electrode active material layer on one side of the positive electrode current collector was 63 $\mu$m, and compacted density of the positive electrode active material layer on one side of the positive electrode current collector was 4.1 g/cm$^3$. Thickness of a first region of the positive electrode active material layer was 42 $\mu$m, and thickness of a second region of the positive electrode active material layer was 21 $\mu$m. A mass percentage A of a conductive agent in the second region of the positive electrode was 1%, and a mass percentage B of the conductive agent in the first region of the positive electrode was 0.67%. The conductive agent in the positive electrode was carbon nanotubes. A binder in the first region of the positive electrode was PVDF. A mass percentage of the binder in the first region of the positive electrode was 1.5%. The number of thermogravimetric weight loss peaks in the first region of the positive electrode active material layer at 200°C to 800°C was 1. A mass change in the first region of the positive electrode was 1.2%. The number of thermogravimetric weight loss peaks in the second region of the positive electrode active material layer at 200°C to 800°C was 0. A mass change in the second region of the positive electrode was 0.1 %. The negative electrode active material layer included graphite, styrene acrylate, lithium carboxymethyl cellulose, and CNT, with mass percentages of 97.4%, 1%, 1%, and 0.6%, respectively. Compacted density of the negative electrode active material layer was 1.74 g/cm$^3$, thickness of the negative electrode active material layer on one side of the negative electrode current collector was 75 $\mu$m. The negative electrode material was graphite. Thickness of a first region of the negative electrode active material layer was 50 $\mu$m, and thickness of a second region of the negative electrode active material layer was 25 $\mu$m.

A mass percentage A of a conductive agent in the second region of the negative electrode was 0.6%, and a mass percentage B of the conductive agent in the first region of the negative electrode was 0.4%. The conductive agent in the negative electrode was carbon nanotubes. A binder in the first region of the negative electrode was styrene acrylate and lithium carboxymethyl cellulose, with a mass ratio of the two binders being 1:1. A mass percentage of the binder in the first region of the negative electrode was 2%. The number of thermogravimetric weight loss peaks in the first region of the negative electrode active material layer at 200°C to 800°C was 2. A mass change in the first region of the negative electrode was 1.6%. The number of thermogravimetric weight loss peaks in the second region of the negative electrode active material layer at 200°C to 800°C was 0 A mass change in the second region of the negative electrode was 0.1 %.

Comparative example 1

Preparation of positive electrode plate: A positive electrode material lithium cobaltate, a binder PVDF, and a conductive agent carbon nanotubes were mixed at a mass ratio of 97.5%:1.5%:1%, and N-methylpyrrolidone (NMP) was added as a solvent to prepare a slurry. The slurry was well stirred to obtain a slurry of a positive electrode active material layer. The slurry was uniformly applied on an aluminum foil positive electrode current collector, and dried at 90°C to obtain a positive electrode plate.

Preparation of negative electrode plate: A negative electrode material graphite, a binder styrene acrylate, a binder lithium carboxymethyl cellulose, and a conducive agent CNT were mixed at a ratio of 97.5%:1%:1%:0.5%, and deionized water was added as a solvent to obtain a slurry of a negative electrode active material layer. A copper foil was used as a negative electrode current collector, and the slurry of the negative electrode active material layer was applied onto the negative electrode current collector and dried at 90°C to obtain a negative electrode plate.

The rest preparation steps of comparative example 1 were the same as in example 1, and the parameter differences between comparative example 1 and example 1 are shown in the following tables.

For other comparative examples 2 and 3, parameters were changed based on the steps in comparative example 1. Specific changed parameters are shown in the following tables.

The following describes test methods in this application.

1. Thermogravimetric test

The battery was discharged to 3.0 V and disassembled to obtain a negative electrode plate, the electrode plate was soaked in DMC (dimethyl carbonate) for 12 hours to 24 hours, then the DMC was replaced and the electrode plate was soaked for another 12 hours to 24 hours. Subsequently, the electrode plate was dried at 80°C to 100°C. Active material layer powder was scraped off from a corresponding position on a surface of the electrode plate for testing. Thermogravimetric analysis was performed on the active material layer of the negative electrode of the prepared lithium-ion battery, covering a mass change and the number of weight loss peaks during the thermogravimetric analysis process, where the test range was 200°C to 800°C, the heating rate was 10°C/min, and the test atmosphere was an inert atmosphere.

2. Resistivity test

The resistivity of the active material layer was tested by using a resistance tester, and the electrode plate was directly measured by using an upper and lower plane controllable pressure probe. An alternating current was applied to the positive electrode plate or negative electrode plate under test, while a specified pressure (0.35 T) was applied to the active material layer under test to obtain an overall resistance in a thickness direction of the electrode plate. At the same time, area (A) and thickness (l) of the electrode plate under test were collected. According to the resistivity calculation formula ($\rho = R*A/l$), the resistivity of the electrode plate under test was derived.

3. Alternating current resistance test

A small alternating current of 1 Khz was applied to positive and negative electrodes of the battery, and the alternating current resistance value of the battery was obtained by measuring its voltage response.

4. Direct current resistance DCR test at 25°C

At 25°C, the lithium-ion battery was charged to 4.45 V at a constant current of 0.5C, and then charged to 0.05 C at a constant voltage. After left standing for 30 min, the battery was discharged at 0.1C for 3 h until a state of charge of the battery was 70%SOC (the corresponding discharge end voltage value U1 was recorded), and then discharged at 1C for 1s (the corresponding discharge end voltage value U2 was recorded). "1C" is a current value at which the battery capacity is completely discharged within one hour. The DCR of the battery at 70%SOC was calculated according to the following formula: DCR = (U1 - U2)/(1C - 0.1C).

5. Rate performance test

In an environment at 25°C, the battery was discharged at a constant current to 3 V, and charged and discharged for the first time. The battery was charged at a constant charging current of 0.7C until an upper-limit voltage of 4.48 V was reached, and then charged at a constant voltage to 0.05C. After that, the battery was discharged at a constant discharging current of 0.2C, until a final voltage of 3 V was reached. At that time, a discharge capacity at 0.2C was recorded. Then the battery was repeatedly charged at a charging current of 0.7C until an upper-limit voltage of 4.48 V was reached. Subsequently, the battery was charged at a constant voltage to 0.05C. Following that, the battery was discharged at a set discharge rate of 3C at a constant current, until a final voltage of 3V was reached. A discharge capacity at 3C was recorded at that time.

Discharge capacity retention rate at 3C = (Discharge capacity at 3C/discharge capacity at 0.2C) $\times$ 100%

EP 4 432 387 A1

**Table 1**

| | Composition of positive electrode active material layer | Thickness of active material layer on one side of positive electrode (μm) | Compacted density of active material layer on one side of positive electrode (g/cm³) | Negative electrode active material layer | Thickness of active material layer on one side of negative electrode (μm) | Compacted density of active material layer on one side of negative electrode (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| Example 1 | Lithium cobaltate:PVDF:CNT = 97.5%:1.5%:1% | 63 | 4.1 | Graphite:lithium carboxymethyl cellulose:CNT = 96.9%:2.5%:0.6% | 75 | 1.74 | 50 | 25 | 0.6 | 0.4 |
| Example 2 | Lithium cobaltate:PVDF:CNT = 97.5%:1.5%:1% | 63 | 4.1 | Graphite:styrene acrylate:lithium carboxymethyl cellulose:CNT = 97.4%:1%:1%:0.6% | 75 | 1.74 | 50 | 25 | 0.6 | 0.4 |
| Example 3 | Lithium cobaltate:PVDF:CNT = 97.5%:1.5%:1% | 63 | 4.1 | Graphite:polyacrylate:lithium carboxymethyl cellulose:CNT = 96.6%:1.4%:1.4%:0.6% | 75 | 1.74 | 50 | 25 | 0.6 | 0.4 |
| Example 4 | Lithium cobaltate:PVDF:CNT = 97.5%:1.5%:1% | 63 | 4.1 | Graphite:styrene butadiene rubber:lithium carboxymethyl cellulose:CNT = 97.4%:1%:1%:0.6% | 75 | 1.74 | 50 | 25 | 0.6 | 0.4 |
| Example 5 | Lithium cobaltate:PVDF:CNT = 97.5%:1.5%:1% | 63 | 4.1 | Graphite:styrene butadiene rubber:sodium carboxymethyl cellulose:CNT = 97.4%:1%:1%:0.6% | 75 | 1.74 | 50 | 25 | 0.6 | 0.4 |

| | Example 6 | Example 7 | Example 8 | Example 9 |
|---|---|---|---|---|
| Composition of positive electrode active material layer | Lithium cobaltate:PVDF:CNT = 97.5%:1.5%:1% | Lithium cobaltate:PVDF:CNT = 97.5%:1.5%:1% | Lithium cobaltate:PVDF:CNT = 97.5%:1.5%:1% | Lithium cobaltate:PVDF:CNT = 97.5%:1.5%:1% |
| Thickness of active material layer on one side of positive electrode (μm) | 63 | 63 | 63 | 63 |
| Compacted density of active material layer on one side of positive electrode (g/cm³) | 4.1 | 4.1 | 4.1 | 4.1 |
| Negative electrode active material layer | Graphite:styrene acrylate:sodium carboxymethyl cellulose:CNT = 97.4%:1%:1%:0.6% | Graphite:styrene acrylate:lithium carboxymethyl cellulose:CNT = 99.13%:0.135%:0.135%:0.6% | Graphite:styrene acrylate:lithium carboxymethyl cellulose:CNT = 97.4%:1%:1%:0.6% | Graphite:styrene acrylate:lithium carboxymethyl cellulose:CNT = 96.4%:1.5%:1.5%:0.6% |
| Thickness of active material layer on one side of negative electrode (μm) | 75 | 75 | 75 | 75 |
| Compacted density of active material layer on one side of negative electrode (g/cm³) | 1.74 | 1.74 | 1.74 | 1.74 |
| Thickness of negative electrode first region (μm) | 50 | 50 | 50 | 50 |
| Thickness of negative electrode second region (μm) | 25 | 25 | 25 | 25 |
| Percentage A of conductive agent in negative electrode second region (%wt) | 0.6 | 0.6 | 0.6 | 0.6 |
| Percentage B of conductive agent in negative electrode first region (%wt) | 0.4 | 0.4 | 0.4 | 0.4 |

| | Example 10 | Example 11 | Example 12 | Example 13 | Example 14 |
|---|---|---|---|---|---|
| Composition of positive electrode active material layer | Lithium cobaltate:PVDF:CNT = 97.5%:1.5%:1% | Lithium cobaltate:PVDF:CNT = 97.5%:1.5%:1% | Lithium cobaltate:PVDF:CNT = 97.5%:1.5%:1% | Lithium cobaltate:PVDF:CNT = 97.5%:1.5%:1% | Lithium cobaltate:PVDF:CNT = 97.5%:1.5%:1% |
| Thickness of active material layer on one side of positive electrode (μm) | 63 | 63 | 63 | 63 | 63 |
| Compacted density of active material layer on one side of positive electrode (g/cm$^3$) | 4.1 | 4.1 | 4.1 | 4.1 | 4.1 |
| Negative electrode active material layer | Graphite:styrene acrylate:lithium carboxymethyl cellulose:CNT = 96.4%:2%:1%:0.6% | Graphite:styrene acrylate:lithium carboxymethyl cellulose:CNT = 94.4%:2.5%:2.5%:0.6% | Graphite:styrene acrylate:lithium carboxymethyl cellulose:CNT = 83.15%:8.125%:8.125%:0.6% | Graphite:styrene acrylate:lithium carboxymethyl cellulose:CNT = 97.4%:1%:1%:0.6% | Graphite:polyacrylate:lithium carboxymethyl cellulose:CNT = 96.6%:1.4%:1.4%:0.6% |
| Thickness of active material layer on one side of negative electrode (μm) | 75 | 75 | 75 | 75 | 75 |
| Compacted density of active material layer on one side of negative electrode (g/cm$^3$) | 1.74 | 1.74 | 1.74 | 1.74 | 1.74 |
| Thickness of negative electrode first region (μm) | 50 | 50 | 50 | 50 | 50 |
| Thickness of negative electrode second region (μm) | 25 | 25 | 25 | 25 | 25 |
| Percentage A of conductive agent in negative electrode second region (%wt) | 0.6 | 0.6 | 0.6 | 0.6 | 0.6 |
| Percentage B of conductive agent in negative electrode first region (%wt) | 0.4 | 0.4 | 0.4 | 0.4 | 0.4 |

| | Composition of positive electrode active material layer | Thickness of active material layer on one side of positive electrode (μm) | Compacted density of active material layer on one side of positive electrode (g/cm³) | Negative electrode active material layer | Thickness of active material layer on one side of negative electrode (μm) | Compacted density of active material layer on one side of negative electrode (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| Example 15 | Lithium cobaltate:PVDF:CNT = 97.5%:1.5%:1% | 63 | 4.1 | Graphite:styrene acrylate:lithium carboxymethyl cellulose:CNT = 94.4%:2.5%:2.5%:0.6% | 75 | 1.74 | 50 | 25 | 0.6 | 0.4 |
| Comparative example 1 | Lithium cobaltate:PVDF:CNT = 97.5%:1.5%:1% | 63 | 4.1 | Graphite:styrene acrylate:lithium carboxymethyl cellulose:CNT = 97.5%:1%:1%:0.5% | 75 | 1.74 | 50 | 25 | 0.4 | 0.6 |
| Comparative example 2 | Lithium cobaltate:PVDF:CNT = 97.5%:1.5%:1% | 63 | 4.1 | Graphite:styrene acrylate:lithium carboxymethyl cellulose:CNT = 95.1%:2%:2%:0.9% | 75 | 1.74 | 50 | 25 | 0.8 | 1 |
| Comparative example 3 | Lithium cobaltate:PVDF:conductive carbon black = 97.5%:1.5%:1% | 63 | 4.1 | Graphite:styrene acrylate:lithium carboxymethyl cellulose:conductive carbon black = 92.65%:3%:3%:1.35% | 75 | 1.74 | 50 | 25 | 1.2 | 1.5 |

Table 2

| | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| Example 1 | Carbon nanotubes | 50% | Lithium carboxymethyl cellulose | 2.5 | 1 | 1 | 1.6 | 0 | 0.1 | 19 | 35.2 | 74.7 |
| Example 2 | Carbon nanotubes | 50% | Styrene acrylate + lithium carboxymethyl cellulose | 2 | 1:1 | 2 | 1.6 | 0 | 0.1 | 18.6 | 35 | 75.2 |
| Example 3 | Carbon nanotubes | 50% | Polyacrylate + lithium carboxymethyl cellulose | 2.8 | 1:1 | 3 | 1.6 | 0 | 0.1 | 22 | 38 | 70 |
| Example 4 | Carbon nanotubes | 50% | Styrene butadiene rubber + lithium carboxymethyl cellulose | 2 | 1:1 | 2 | 1.6 | 0 | 0.1 | 26 | 40 | 68 |
| Example 5 | Carbon nanotubes | 50% | Styrene butadiene rubber + sodium carboxymethyl cellulose | 2 | 1:1 | 2 | 1.6 | 0 | 0.1 | 30.5 | 44 | 61 |

| | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| Example 6 | Carbon nanotubes | 50% | Styrene acrylate + sodium carboxymethyl cellulose | 2 | 1:1 | 2 | 1.6 | 0 | 0.1 | 20 | 37 | 70 |
| Example 7 | Carbon nanotubes | 50% | Styrene acrylate + lithium carboxymethyl cellulose | 0.27 | 1:1 | 2 | 0.21 | 0 | 0.1 | 12 | 30 | 85 |
| Example 8 | Carbon nanotubes | 50% | Styrene acrylate + lithium carboxymethyl cellulose | 2 | 1:1 | 2 | 1.6 | 0 | 0.1 | 18.5 | 35.2 | 75.5 |
| Example 9 | Carbon nanotubes | 50% | Styrene acrylate + lithium carboxymethyl cellulose | 3 | 1:1 | 2 | 2.4 | 0 | 0.1 | 26 | 41 | 68 |
| Example 10 | Carbon nanotubes | 50% | Styrene acrylate + lithium carboxymethyl cellulose | 3 | 2:1 | 2 | 2.6 | 0 | 0.1 | 22 | 38 | 71 |

EP 4 432 387 A1

| | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| Example 11 | Carbon nanotubes | 50% | Styrene acrylate + lithium carboxymethyl cellulose | 5 | 1:1 | 2 | 4.02 | 0 | 0.1 | 28 | 43 | 65 |
| Example 12 | Carbon nanotubes | 50% | Styrene acrylate + lithium carboxymethyl cellulose | 16.25 | 1:1 | 2 | 13 | 0 | 0.1 | 36 | 50 | 54 |
| Example 13 | Carbon nanotubes | 50% | Styrene acrylate + lithium carboxymethyl cellulose | 2 | 1:1 | 2 | 1.6 | 1 | 0.97 | 21 | 37 | 72 |
| Example 14 | Carbon nanotubes | 50% | Polyacrylate + lithium carboxymethyl cellulose | 2.8 | 1:1 | 3 | 1.6 | 2 | 0.7 | 25 | 39.5 | 68.5 |
| Example 15 | Carbon nanotubes | 50% | Styrene acrylate + lithium carboxymethyl cellulose | 5 | 1:1 | 2 | 4.02 | 1 | 2.4 | 31 | 45 | 62 |

EP 4 432 387 A1

| | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| Comparative example 1 | Carbon nanotubes | -33% | Styrene acrylate + lithium carboxymethyl cellulose | 2 | 1:1 | 2 | 1.5 | 2 | 1.7 | 45 | 57 | 50 |
| Comparative example 2 | Carbon nanotubes | -20% | Styrene acrylate + lithium carboxymethyl cellulose | 4 | 1:1 | 2 | 3 | 2 | 3.4 | 50 | 62 | 48 |
| Comparative example 3 | Conductive carbon black | -20% | Styrene acrylate + lithium carboxymethyl cellulose | 6 | 1:1 | 2 | 4.5 | 2 | 5.1 | 55 | 70 | 45 |

EP 4 432 387 A1

Tables 1 and 2 show the preparation parameters and performance test results of examples 1 to 15 and comparative examples 1 to 3, and the percentages in the tables are all mass ratios.

Refer to Tables 1 and 2. In examples 1 to 15, a difference between the number of weight loss peaks in the first region of the negative electrode at 200°C to 800°C and the number of weight loss peaks in the second region of the negative electrode at 200°C to 800°C is not less than 1. In comparative examples 1 to 3, a difference between the number of weight loss peaks in the first region of the negative electrode at 200°C to 800°C and the number of weight loss peaks in the second region of the negative electrode at 200°C to 800°C is 0. The alternating current resistance and direct current resistance of examples 1 to 15 are lower than the alternating current resistance and direct current resistance of comparative examples 1 to 3, and the discharge capacity retention rate at 3C of examples 1 to 15 is higher than the discharge capacity retention rate at 3C of comparative examples 1 to 3. This may be because when the difference between the number of thermal weight loss peaks in the first region and the number of thermal weight loss peaks in the second region at 200°C to 800°C is ≥ 1, the second region has better conductivity and ions and electrons can easily pass through the second region to reach the first region, thereby improving the kinetic performance of the electrode plate.

Refer to examples 1 to 3. With a change in the number of weight loss peaks in the first region of the negative electrode at 200°C to 800°C, the alternating current resistance, direct current resistance, and discharge capacity at 3C of the lithium-ion battery are still better than the alternating current resistance, direct current resistance, and discharge capacity at 3C in comparative examples 1 to 3. It can be seen that as long as the difference in the numbers of weight loss peaks between the first region and the second region is not less than 1, the foregoing technical effects of this application can be achieved.

In comparative examples 1 to 3, the percentage of the conductive agent in the first region is higher than the percentage of the conductive agent in the second region, resulting in poor conductivity of the second region, which affects the transport of electrons and ions from the second region to the first region and thus affects the kinetic performance. However, in examples 1 to 12, the percentage of the conductive agent in the second region is higher than the percentage of the conductive agent in the first region, which is conducive to improving the kinetic performance.

Refer to examples 1, and 4 to 6, which show the effects of different binder compositions. It can be seen that different binders have certain effects on the direct current resistance, alternating current resistance, and discharge capacity retention rate at 3C of the lithium-ion battery. When the binder includes styrene acrylate and lithium carboxymethyl cellulose, the performance of the lithium-ion battery is the best.

Refer to examples 7 to 9, 11, and 12, which show the effects of the change of the mass percentage of the binder in the first region of the negative electrode on the lithium-ion battery. With the increase of the mass percentage of the binder, the thermogravimetric mass change of the first region at 200°C to 800°C increases due to decomposition and oxidation of the binder during the thermogravimetric analysis. Furthermore, the alternating current resistance and direct current resistance increase, and the discharge capacity retention rate at 3C decreases, because the existence of the binder hinders the transport of ions and electrons, thereby reducing conductivity.

Examples 9 and 10 show that when the composition of the binder remains unchanged, changing the composition ratio of the binder can affect the performance of the lithium-ion battery.

In examples 13 to 15, through appropriate adjustment of the time and/or temperature of heat treatment on the negative electrode, the number of weight loss peaks in the second region of the negative electrode at 200°C to 800°C was made different from the number of weight loss peaks in the second region of the negative electrode at 200°C to 800°C in examples 2, 3, and 11. This shows that when the number of weight loss peaks in the second region of the negative electrode at 200°C to 800°C is controlled to be 0, the performance of the lithium-ion battery is the best.

Table 3

| Example | Composition of positive electrode active material layer | Thickness of positive electrode active material layer (μm) | Compacted density of positive electrode active material layer (g/cm³) | Negative electrode active material layer | Thickness of negative electrode active material layer (μm) | Compacted density of negative electrode active material layer (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| 16 | Lithium cobaltate: PVDF:CNT = 97.5%:1.5%:1% | 13 | 4.1 | Graphite: styrene acrylate:lithium carboxymethyl cellulose:CNT = 97.4%:1%:1%:0.6% | 15 | 1.74 | 10 | 5 | 0.6 | 0.4 |
| 17 | Lithium cobaltate: PVDF:CNT = 97.5%:1.5%:1% | 1254 | 4.1 | Graphite: styrene acrylate:lithium carboxymethyl cellulose:CNT = 97.4%:1%:1%:0.6% | 1500 | 1.74 | 1000 | 500 | 0.6 | 0.4 |
| 18 | Lithium cobaltate: PVDF:CNT = 97.5%:1.5%:1% | 130 | 4.1 | Graphite: styrene acrylate:lithium carboxymethyl cellulose:CNT = 97.4%:1%:1%:0.6% | 150 | 1.74 | 100 | 50 | 0.6 | 0.4 |
| 8 | Lithium cobaltate: PVDF:CNT = 97.5%:1.5%:1% | 63 | 4.1 | Graphite: styrene acrylate:lithium carboxymethyl cellulose:CNT = 97.4%:1%:1%:0.6% | 75 | 1.74 | 50 | 25 | 0.6 | 0.4 |

(continued)

| Example | Composition of positive electrode active material layer | Thickness of positive electrode active material layer (μm) | Compacted density of positive electrode active material layer (g/cm³) | Negative electrode active material layer | Thickness of negative electrode active material layer (μm) | Compacted density of negative electrode active material layer (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| 19 | Lithium cobaltate: PVDF:CNT = 97.5%:1.5%:1% | 26 | 4.1 | Graphite: styrene acrylate:lithium carboxymethyl cellulose:CNT = 97.4%:1%:1%:0.6% | 30 | 1.74 | 20 | 10 | 0.6 | 0.4 |
| 20 | Lithium cobaltate: PVDF:CNT = 97.5%:1.5%:1% | 22 | 4.1 | Graphite: styrene acrylate:lithium carboxymethyl cellulose:CNT = 97.4%:1%:1%:0.6% | 75 | 0.6 | 50 | 25 | 0.6 | 0.4 |
| 21 | Lithium cobaltate: PVDF:CNT = 97.5%:1.5%:1% | 36 | 4.1 | Graphite: styrene acrylate:lithium carboxymethyl cellulose:CNT = 97.4%:1%:1%:0.6% | 75 | 1 | 50 | 25 | 0.6 | 0.4 |
| 8 | Lithium cobaltate: PVDF:CNT = 97.5%:1.5%:1% | 63 | 4.1 | Graphite: styrene acrylate:lithium carboxymethyl cellulose:CNT = 97.4%:1%:1%:0.6% | 75 | 1.74 | 50 | 25 | 0.6 | 0.4 |

(continued)

| Example | Composition of positive electrode active material layer | Thickness of positive electrode active material layer (μm) | Compacted density of positive electrode active material layer (g/cm³) | Negative electrode active material layer | Thickness of negative electrode active material layer (μm) | Compacted density of negative electrode active material layer (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| 22 | Lithium cobaltate: PVDF:CNT = 97.5%:1.5%:1% | 66 | 4.1 | Graphite: styrene acrylate:lithium carboxymethyl cellulose:CNT = 97.4%:1%:1%:0.6% | 75 | 1.83 | 50 | 25 | 0.6 | 0.4 |
| 23 | Lithium cobaltate: PVDF:CNT = 97.5%:1.5%:1% | 67 | 4.1 | Graphite: styrene acrylate:lithium carboxymethyl cellulose:CNT = 97.4%:1%:1%:0.6% | 75 | 1.85 | 50 | 25 | 0.6 | 0.4 |
| 24 | Lithium cobaltate: PVDF:CNT = 97.5%:1.5%:1% | 63 | 4.1 | Silica: styrene acrylate:lithium carboxymethyl cellulose:CNT= 97.4%:1%:1%:0.6% | 24 | 1.6 | 16 | 8 | 0.6 | 0.4 |
| 25 | Lithium cobaltate: PVDF:CNT = 97.5%:1.5%:1% | 63 | 4.1 | Lithium titanate: styrene acrylate:lithium carboxymethyl cellulose:CNT = 97.4%:1%:1%:0.6% | 114 | 1.74 | 76 | 38 | 0.6 | 0.4 |

| Example | Composition of positive electrode active material layer | Thickness of positive electrode active material layer ($\mu$m) | Compacted density of positive electrode active material layer (g/cm$^3$) | Negative electrode active material layer | Thickness of negative electrode active material layer ($\mu$m) | Compacted density of negative electrode active material layer (g/cm$^3$) | Thickness of negative electrode first region ($\mu$m) | Thickness of negative electrode second region ($\mu$m) | Percentage A of conductive agent in negative electrode second region (%wt) | Percentage B of conductive agent in negative electrode first region (%wt) |
|---|---|---|---|---|---|---|---|---|---|---|
| 8 | Lithium cobaltate: PVDF:CNT = 97.5%:1.5%: 1% | 63 | 4.1 | Graphite: styrene acrylate:lithium carboxymethyl cellulose:CNT = 97.4%:1%:1%: 0.6% | 75 | 1.74 | 50 | 25 | 0.6 | 0.4 |
| 26 | Lithium cobaltate: PVDF:CNT = 97.5%:1.5%: 1% | 63 | 4.1 | Silicon: styrene acrylate:lithium carboxymethyl cellulose:CNT = 97.4%:1%:1%: 0.6% | 15 | 1.6 | 10 | 5 | 0.6 | 0.4 |
| 27 | Lithium cobaltate: PVDF:CNT = 97.5%:1.5%: 1% | 63 | 4.1 | Hard carbon: styrene acrylate: lithium carboxymethyl cellulose:CNT = 97.4%:1%:1%: 0.6% | 66 | 1.3 | 44 | 22 | 0.6 | 0.4 |

EP 4 432 387 A1

Table 4

| Example | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 16 | Carbon nanotubes | 50% | Styrene acrylate + lithium carboxymethyl cellulose | 2 | 1:1 | 2 | 1.6 | 0 | 0.1 | 12.6 | 26 | 87 |

| Example | Conductive agent | (A - B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 17 | Carbon nanotubes | 50% | Styrene acrylate + lithium carboxymethyl cellulose | 2 | 1:1 | 2 | 1.6 | 0 | 0.1 | 36 | 58 | 62 |
| 18 | Carbon nanotubes | 50% | Styrene acrylate + lithium carboxymethyl cellulose | 2 | 1:1 | 2 | 1.6 | 0 | 0.1 | 22 | 40 | 70 |

(continued)

| Example | Conductive agent | (A - B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 8 | Carbon nanotubes | 50% | Styrene acrylate + lithium carboxymethyl cellulose | 2 | 1:1 | 2 | 1.6 | 0 | 0.1 | 18.5 | 35.2 | 75.5 |
| 19 | Carbon nanotubes | 50% | Styrene acrylate + lithium carboxymethyl cellulose | 2 | 1:1 | 2 | 1.6 | 0 | 0.1 | 14 | 28 | 85 |
| 20 | Carbon nanotubes | 50% | Styrene acrylate + lithium carboxymethyl cellulose | 2 | 1:1 | 2 | 1.6 | 0 | 0.1 | 12 | 27 | 90 |

| Example | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 21 | Carbon nanotubes | 50% | Styrene acrylate + lithium carboxymethyl cellulose | 2 | 1:1 | 2 | 1.6 | 0 | 0.1 | 14 | 30 | 86 |
| 8 | Carbon nanotubes | 50% | Styrene acrylate + lithium carboxymethyl cellulose | 2 | 1:1 | 2 | 1.6 | 0 | 0.1 | 18.5 | 35.2 | 75.5 |
| 22 | Carbon nanotubes | 50% | Styrene acrylate + lithium carboxymethyl cellulose | 2 | 1:1 | 2 | 1.6 | 0 | 0.1 | 23 | 37 | 67 |
| 23 | Carbon nanotubes | 50% | Styrene acrylate + lithium carboxymethyl cellulose | 2 | 1:1 | 2 | 1.6 | 0 | 0.1 | 24 | 39 | 65 |
| 24 | Carbon nanotubes | 50% | Styrene acrylate + lithium carboxymethyl cellulose | 2 | 1:1 | 2 | 1.6 | 0 | 0.1 | 32 | 45 | 60 |

EP 4 432 387 A1

| Example | Conductive agent | (A-B) /B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 25 | Carbon nanotubes | 50% | Styrene acrylate + lithium carboxymethyl cellulose | 2 | 1:1 | 2 | 1.6 | 0 | 0.1 | 29 | 43 | 67 |
| 8 | Carbon nanotubes | 50% | Styrene acrylate + lithium carboxymethyl cellulose | 2 | 1:1 | 2 | 1.6 | 0 | 0.1 | 18.5 | 35.2 | 75.5 |
| 26 | Carbon nanotubes | 50% | Styrene acrylate + lithium carboxymethyl cellulose | 2 | 1:1 | 2 | 1.6 | 0 | 0.1 | 27.5 | 42 | 65 |
| 27 | Carbon nanotubes | 50% | Styrene acrylate + lithium carboxymethyl cellulose | 2 | 1:1 | 2 | 1.6 | 0 | 0.1 | 14 | 28 | 86 |

Tables 3 and 4 show the preparation parameters and performance test results of examples 8, and 20 to 27, and the percentages in the tables are all mass ratios.

Refer to examples 8, and 16 to 19, which show the effects of thickness of the negative electrode active material layer. With an increase in thickness of the negative electrode active material layer, the alternating current resistance and direct current resistance of the lithium-ion battery increase, and the discharge capacity retention rate at 3C decreases. This is because the increase in thickness leads to an increase in transport paths of ions and electrons, thereby deteriorating the kinetic performance. However, when thickness of the negative electrode active material layer is too small, the negative electrode active material layer carries too little negative electrode active material, which is detrimental to energy density.

Refer to examples 8, and 20 to 23, which show the effects of thickness of the positive electrode active material layer. Similarly to the negative electrode, when thickness of the positive electrode active material increases, it also leads to an increase in direct current resistance and alternating current resistance, and a decrease in the discharge capacity retention rate at 3C. However, when thickness of the positive electrode active material layer is too small, the energy density is also affected.

Refer to examples 8, and 24 to 27, which show the effects of the composition of the negative electrode active material layer. It can be seen that when the negative electrode material is selected from silicon oxide, lithium cobaltate, graphite, silicon, or hard carbon, a good result can be achieved. However, the compacted density of the negative electrode active material layer varies with the selected negative electrode material, and the comprehensive performance is better when the negative electrode material is graphite.

**Table 5**

| Example | Composition of positive electrode active material layer | Thickness of positive electrode active material layer (μm) | Compacted density of positive electrode active material layer | Negative electrode active material layer | Thickness of negative electrode active material layer (μm) | Compacted density of negative electrode active material layer (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| 28 | Lithium cobaltate: PVDF:CNT = 97.5%:1.5%: 1% | 63 | 4.1 | Graphite: styrene acrylate: lithium carboxymethyl cellulose:CNT = 97.85%:1%:1%: 0.15% | 75 | 1.74 | 50 | 25 | 0.15 | 0.1 |
| 29 | Lithium cobaltate: PVDF:CNT = 97.5%:1.5%: 1% | 63 | 4.1 | Graphite: styrene acrylate: lithium carboxymethyl cellulose:CNT = 96%:1%:1%:2% | 75 | 1.74 | 50 | 25 | 2 | 1.33 |
| 8 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |
| 30 | Lithium cobaltate: PVDF:CNT = 97.5%:1.5%: 1% | 63 | 4.1 | Graphite: styrene acrylate: lithium carboxymethyl cellulose:CNT = 97.44%:1%:1%: 0.56% | 75 | 1.74 | 50 | 25 | 0.56 | 0.4 |

EP 4 432 387 A1

| Example | Composition of positive electrode active material layer | Thickness of positive electrode active material layer (μm) | Compacted density of positive electrode active material layer | Negative electrode active material layer | Thickness of negative electrode active material layer (μm) | Compacted density of negative electrode active material layer (g/cm³) | Thickness of negative electrode first region (μm) | Thickness of negative electrode second region (μm) | Percentage A of conductive agent in negative electrode second region (%wt) | Percentage B of conductive agent in negative electrode first region (%wt) |
|---|---|---|---|---|---|---|---|---|---|---|
| 31 | Lithium cobaltate: PVDF:CNT = 97.5%:1.5%: 1% | 63 | 4.1 | Graphite: styrene acrylate: lithium carboxymethyl cellulose:CNT = 97.52%:1%:1%: 0.48% | 75 | 1.74 | 50 | 25 | 0.48 | 0.4 |
| 32 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |
| 33 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |
| 34 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |

(continued)

| Example | Composition of positive electrode active material layer | Thickness of positive electrode active material layer ($\mu$m) | Compacted density of positive electrode active material layer | Negative electrode active material layer | Thickness of negative electrode active material layer ($\mu$m) | Compacted density of negative electrode active material layer (g/cm$^3$) | Thickness of negative electrode first region ($\mu$m) | Thickness of negative electrode second region ($\mu$m) | Percentage A of conductive agent in negative electrode second region (%wt) | Percentage B of conductive agent in negative electrode first region (%wt) |
|---|---|---|---|---|---|---|---|---|---|---|
| 8 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |
| 35 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |
| 36 | Lithium cobaltate: PVDF:CNT = 97.5%:1.5%: 1% | 63 | 4.1 | Graphite: styrene acrylate: lithium carboxymethyl cellulose:CNT = 97.4%:1%:1%: 0.6% | 75 | 1.74 | 50 | 25 | 0.6 | 0.4 |

33

**Table 6**

| Example | Conductive agent | (A - B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 28 | Carbon nanotubes | 50% | Styrene acrylate + lithium carboxymethyl cellulose | 2 | 1:1 | 2 | 1.6 | 0 | 0.1 | 25 | 42 | 65 |
| 29 | Carbon nanotubes | 50% | Styrene acrylate + lithium carboxymethyl cellulose | 2 | 1:1 | 2 | 1.6 | 0 | 0.1 | 15 | 28 | 89 |
| 8 | Carbon nanotubes | 50% | Styrene acrylate + lithium carboxymethyl cellulose | 2 | 1:1 | 2 | 1.6 | 0 | 0.1 | 18.5 | 35.2 | 75.5 |
| 30 | Carbon nanotubes | 40% | Styrene acrylate + lithium carboxymethyl cellulose | 2 | 1:1 | 2 | 1.6 | 0 | 0.1 | 19 | 35 | 74 |
| 31 | Carbon nanotubes | 20% | Styrene acrylate + lithium carboxymethyl cellulose | 2 | 1:1 | 2 | 1.6 | 0 | 0.1 | 20 | 37 | 72 |

| Example | Conductive agent | (A-B)/B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 32 | Conductive carbon black | 50% | Styrene acrylate + lithium carboxymethyl cellulose | 2 | 1:1 | 2 | 1.6 | 0 | 0.1 | 36 | 48 | 61 |
| 33 | Acetylene black | 50% | Styrene acrylate + lithium carboxymethyl cellulose | 2 | 1:1 | 2 | 1.6 | 0 | 0.1 | 26 | 43 | 64 |
| 34 | Ketjen black | 50% | Styrene acrylate + lithium carboxymethyl cellulose | 2 | 1:1 | 2 | 1.6 | 0 | 0.1 | 19 | 36 | 73 |
| 8 | Carbon nanotubes | 50% | Styrene acrylate + lithium carboxymethyl cellulose | 2 | 1:1 | 2 | 1.6 | 0 | 0.1 | 18.5 | 35.2 | 75.5 |
| 35 | Graphene | 50% | Styrene acrylate + lithium carboxymethyl cellulose | 2 | 1:1 | 2 | 1.6 | 0 | 0.1 | 17 | 33 | 78 |

| Example | Conductive agent | (A-B) /B | Type of polymer compound in first region of negative electrode active material layer | Percentage of added polymer compound in negative electrode first region (%wt) | Ratio of different adhesions in negative electrode first region | Number of weight loss peaks in negative electrode first region at 200°C to 800°C | Mass change of negative electrode first region at 200°C to 800°C (%) | Number of weight loss peaks in negative electrode second region at 200°C to 800°C | Mass change of negative electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|---|---|
| 36 | Carbon fiber | 50% | Styrene acrylate + lithium carboxymethyl cellulose | 2 | 1:1 | 2 | 1.6 | 0 | 0.1 | 20 | 37 | 74 |

EP 4 432 387 A1

Tables 5 and 6 show the preparation parameters and performance test results of examples 8, and 28 to 36, and the percentages in the tables are all mass ratios.

Refer to examples 8, 28, and 29, which show the effects of the mass percentage of the conductive agent in the negative electrode active material layer. With the increase of the mass percentage of the conductive agent, both the direct current resistance and the alternating current resistance decrease, and the discharge capacity retention rate at 3C increases, because the conductive agent improves the overall conductivity of the negative electrode active material layer. However, when the mass percentage of the conductive agent is too high, the energy density of the lithium-ion battery decreases.

Refer to examples 8, 30, and 31, which show the effects of distribution of the conductive agent in the negative electrode active material layer. It can be seen that when (A - B)/B is greater than 20%, the direct current resistance and the alternating current resistance can be reduced apparently and the rate performance can be improved. This is because an increase in the content of the conductive agent in the second region promotes the transport of ions and electrons to the first region, thereby enhancing the kinetic performance.

Referring to examples 8, and 32 to 36, which show effects of a type of the conductive agent in the negative electrode active material layer. When the conductive agent is conductive carbon black, acetylene black, Ketjen black, carbon nanotubes, graphene, or carbon fiber, the performance of the lithium-ion battery is relatively good, and the performance is best when the conductive agent is carbon nanotubes.

**Table 7**

| Example | Negative electrode active material layer | Thickness of negative electrode active material layer (μm) | Compacted density of negative electrode active material layer (g/cm³) | Positive electrode active material layer | Thickness of positive electrode active material layer (μm) | Compacted density of positive electrode active material layer (g/cm³) | Thickness of positive electrode first region (μm) | Thickness of positive electrode second region (μm) | Percentage A of conductive agent in positive electrode second region (%wt) | Percentage B of conductive agent in positive electrode first region (%wt) |
|---|---|---|---|---|---|---|---|---|---|---|
| 37 | Graphite: styrene acrylate: lithium carboxymethyl cellulose:CNT = 97.4%:1%:1%: 0.6% | 37 | 1.74 | Lithium cobaltate: PVDF:CNT = 97.5%:1.5%: 1% | 63 | 2 | 42 | 21 | 1 | 0.67 |
| 38 | Graphite: styrene acrylate: lithium carboxymethyl cellulose:CNT = 97.4%:1%:1%: 0.6% | 73 | 1.74 | Lithium cobaltate: PVDF:CNT = 97.5%:1.5%: 1% | 63 | 4 | 42 | 21 | 1 | 0.67 |
| 39 | Graphite: styrene acrylate: lithium carboxymethyl cellulose:CNT = 97.4%:1%:1%: 0.6% | 75 | 1.74 | Lithium cobaltate: PVDF:CNT = 97.5%:1.5%: 1% | 63 | 4.1 | 42 | 21 | 1 | 0.67 |
| 40 | Graphite: styrene acrylate: lithium carboxymethyl cellulose:CNT = 97.4%:1%:1%: 0.6% | 77 | 1.74 | Lithium cobaltate: PVDF:CNT = 97.5%:1.5%: 1% | 63 | 4.23 | 42 | 21 | 1 | 0.67 |

| Example | Negative electrode active material layer | Thickness of negative electrode active material layer (μm) | Compacted density of negative electrode active material layer (g/cm³) | Positive electrode active material layer | Thickness of positive electrode active material layer (μm) | Compacted density of positive electrode active material layer (g/cm³) | Thickness of positive electrode first region (μm) | Thickness of positive electrode second region (μm) | Percentage A of conductive agent in positive electrode second region (%wt) | Percentage B of conductive agent in positive electrode first region (%wt) |
|---|---|---|---|---|---|---|---|---|---|---|
| 41 | Graphite: styrene acrylate: lithium carboxymethyl cellulose:CNT = 97.4%:1%:1%: 0.6% | 78 | 1.74 | Lithium cobaltate: PVDF:CNT = 97.5%:1.5%: 1% | 63 | 4.25 | 42 | 21 | 1 | 0.67 |
| 42 | Graphite: styrene acrylate: lithium carboxymethyl cellulose:CNT = 97.4%:1%:1%: 0.6% | 30 | 1.74 | Lithium cobaltate: PVDF:CNT = 97.5%:1.5%: 1% | 26 | 4.1 | 17.3 | 8.7 | 1 | 0.67 |
| 43 | Graphite: styrene acrylate: lithium carboxymethyl cellulose:CNT = 97.4%:1%:1%: 0.6% | 150 | 1.74 | Lithium cobaltate: PVDF:CNT = 97.5%:1.5%: 1% | 130 | 4.1 | 87 | 43 | 1 | 0.67 |
| 44 | Graphite: styrene acrylate: lithium carboxymethyl cellulose:CNT = 97.4%:1%:1%: 0.6% | 1500 | 1.74 | Lithium cobaltate: PVDF:CNT = 97.5%:1.5%: 1% | 1300 | 4.1 | 870 | 430 | 1 | 0.67 |

| Example | Negative electrode active material layer | Thickness of negative electrode active material layer ($\mu$m) | Compacted density of negative electrode active material layer (g/cm$^3$) | Positive electrode active material layer | Thickness of positive electrode active material layer ($\mu$m) | Compacted density of positive electrode active material layer (g/cm$^3$) | Thickness of positive electrode first region ($\mu$m) | Thickness of positive electrode second region ($\mu$m) | Percentage A of conductive agent in positive electrode second region (%wt) | Percentage B of conductive agent in positive electrode first region (%wt) |
|---|---|---|---|---|---|---|---|---|---|---|
| 45 | Graphite: styrene acrylate: lithium carboxymethyl cellulose:CNT = 97.4%:1%:1%: 0.6% | 37 | 1.74 | Lithium iron phosphate: PVDF:CNT = 97.5%:1.5%: 1% | 63 | 2.3 | 42 | 21 | 1 | 0.67 |
| 46 | Graphite: styrene acrylate: lithium carboxymethyl cellulose:CNT = 97.4%:1%:1%: 0.6% | 72 | 1.74 | Lithium nickel cobalt manganate: PVDF:CNT = 97.5%:1.5%: 1% | 63 | 3.5 | 42 | 21 | 1 | 0.67 |
| 39 | Graphite: styrene acrylate: lithium carboxymethyl cellulose:CNT = 97.4%:1%:1%: 0.6% | 75 | 1.74 | Lithium cobaltate: PVDF:CNT = 97.5%:1.5%: 1% | 63 | 4.1 | 42 | 21 | 1 | 0.67 |
| 47 | Graphite: styrene acrylate: lithium carboxymethyl cellulose:CNT = 97.4%:1%:1%: 0.6% | 32 | 1.74 | Lithium manganate: PVDF:CNT = 97.5%:1.5%: 1% | 63 | 3.1 | 42 | 21 | 1 | 0.67 |

(continued)

| Example | Negative electrode active material layer | Thickness of negative electrode active material layer (µm) | Compacted density of negative electrode active material layer (g/cm³) | Positive electrode active material layer | Thickness of positive electrode active material layer (µm) | Compacted density of positive electrode active material layer (g/cm³) | Thickness of positive electrode first region (µm) | Thickness of positive electrode second region (µm) | Percentage A of conductive agent in positive electrode second region (%wt) | Percentage B of conductive agent in positive electrode first region (%wt) |
|---|---|---|---|---|---|---|---|---|---|---|
| 48 | Graphite: styrene acrylate: lithium carboxymethyl cellulose:CNT = 97.4%:1%:1%: 0.6% | 75 | 1.74 | Lithium nickel cobalt aluminate: PVDF:CNT = 97.5%:1.5%: 1% | 63 | 3.5 | 42 | 21 | 1 | 0.67 |
| 49 | Graphite: styrene acrylate: lithium carboxymethyl cellulose:CNT = 97.4%:1%:1%: 0.6% | 75 | 1.74 | Lithium cobaltate: PVDF:CNT = 97.5%:1.5%: 1% | 63 | 4.1 | 42 | 21 | 1 | 0.67 |

**Table 8**

| Example | (A-B)/B | Type of polymer compound in first region of positive electrode active material layer | Percentage of added polymer compound in positive electrode first region (%wt) | Number of weight loss peaks in positive electrode first region at 200°C to 800°C | Mass change of positive electrode first region at 200°C to 800°C (%) | Number of weight loss peaks in positive electrode second region at 200°C to 800°C | Mass change of positive electrode second region at 200°C to 800°C (%) | Alternating current resistance (mΩ) | Direct current resistance (mΩ) | Discharge capacity retention rate at 3C (%) |
|---|---|---|---|---|---|---|---|---|---|---|
| 37 | 50% | PVDF | 1.5 | 1 | 1.2 | 0 | 0.1 | 25 | 43 | 70 |
| 38 | 50% | PVDF | 1.5 | 1 | 1.2 | 0 | 0.1 | 30 | 45 | 67 |
| 39 | 50% | PVDF | 1.5 | 1 | 1.2 | 0 | 0.1 | 31 | 46 | 65 |
| 40 | 50% | PVDF | 1.5 | 1 | 1.2 | 0 | 0.1 | 33 | 47 | 64 |
| 41 | 50% | PVDF | 1.5 | 1 | 1.2 | 0 | 0.1 | 33 | 48 | 63 |
| 42 | 50% | PVDF | 1.5 | 1 | 1.2 | 0 | 0.1 | 22 | 38 | 75 |
| 43 | 50% | PVDF | 1.5 | 1 | 1.2 | 0 | 0.1 | 36 | 50 | 60 |
| 44 | 50% | PVDF | 1.5 | 1 | 1.2 | 0 | 0.1 | 43 | 54 | 56 |
| 45 | 50% | PVDF | 1.5 | 1 | 1.2 | 0 | 0.1 | 42 | 53 | 58 |
| 46 | 50% | PVDF | 1.5 | 1 | 1.2 | 0 | 0.1 | 24 | 40 | 73 |
| 39 | 50% | PVDF | 1.5 | 1 | 1.2 | 0 | 0.1 | 31 | 46 | 65 |
| 47 | 50% | PVDF | 1.5 | 1 | 1.2 | 0 | 0.1 | 26 | 42 | 69 |
| 48 | 50% | PVDF | 1.5 | 1 | 1.2 | 0 | 0.1 | 33 | 47 | 63 |
| 49 | 50% | PVDF | 1.5 | 1 | 1.2 | 0 | 0.1 | 13 | 27 | 93 |

Tables 7 and 8 show the preparation parameters and performance test results of examples 37 to 49. The percentages in the tables are all mass ratios. In examples 37 to 49, heat treatment was performed on the positive electrode. In example 49, heat treatment was performed on both the positive electrode and the negative electrode.

Refer to examples 37 to 41, which show the effects of compacted density of the positive electrode active material layer. With the increase in the compacted density of the positive electrode active material layer, the alternating current impedance and direct current resistance increase, and the discharge capacity retention rate at 3C decreases. This is because the increase in the compacted density leads to an increase in the positive electrode material per unit volume, reducing the infiltration of the electrolyte and deteriorating the kinetic performance.

Refer to examples 42 to 44, which show the effects of thickness of the positive electrode active material layer. With the increase in thickness of the positive electrode active material layer, the kinetic performance deteriorates, the resistance increases, and the rate performance deteriorates.

Refer to examples 45 to 48, which show the effects of the positive electrode active material. The active materials used in these examples all have good performance, and the comprehensive performance is better when the active material is lithium cobaltate. In example 49, heat treatment was performed on both the positive electrode and the negative electrode. Therefore, both the positive electrode and the negative electrode have good kinetic performance, the alternating current impedance and direct current resistance are the lowest, and the discharge performance at 3C is the best.

The foregoing descriptions are merely preferred embodiments of this application and explanations of the technical principles used. Persons skilled in the art should understand that the scope of disclosure involved in this application is not limited to the technical solutions formed by the specific combination of the foregoing technical features, and should also cover other technical solutions formed by any combination of the foregoing technical features or their equivalent features, for example, the technical solution formed by replacement between the foregoing features and technical features having similar functions disclosed in this application.

## Claims

1. An electrode, comprising a current collector and an active material layer disposed on one side or two sides of the current collector; wherein the active material layer comprises a first region and a second region, and in a thickness direction of the electrode, the first region is located between the current collector and the second region; and the first region is from a current collector side to 2/3 of thickness of the active material layer, and the second region is from 2/3 of thickness of the active material layer to a surface of the electrode; wherein
   a difference between a number of thermal weight loss peaks of the first region and a number of thermal weight loss peaks of the second region at 200°C to 800°C is $\geq$ 1 according to results of a thermogravimetric analysis performed on the active material layer in an inert atmosphere at a temperature rise rate of 10°C/min.

2. The electrode according to claim 1, wherein the number of weight loss peaks of the first region at 200°C to 800°C is not less than 1 and the number of weight loss peaks of the second region at 200°C to 800°C is 0 to 2 according to the results of a thermogravimetric analysis performed on the active material layer in an inert atmosphere at a temperature rise rate of 10°C/min.

3. The electrode according to claim 1, wherein at least one of the following is satisfied:

   (a) a mass change of the first region at 200°C to 800°C is 0.21% to 13% according to the results of the thermogravimetric analysis; or
   (b) a mass change of the second region at 200°C to 800°C is 0% to 2.4°lo according to the results of the thermogravimetric analysis.

4. The electrode according to claim 1, wherein a mass change of the first region at 200°C to 800°C is 1.6% to 4.02% according to the results of the thermogravimetric analysis.

5. The electrode according to claim 1, wherein the electrode is a negative electrode, the active material layer is a negative electrode active material layer, and the current collector is a negative electrode current collector.

6. The electrode according to claim 5, wherein the electrode satisfies at least one of the following conditions:

   (c) compacted density $\rho_1$ of the negative electrode active material layer satisfies:

$$\rho_1 \geq 0.6 \text{ g/cm}^3;$$

(d) thickness $h_1$ of the negative electrode active material layer on one side of the negative electrode current collector satisfies: $h_1 \geq 10\ \mu\text{m}$; or

(e) the negative electrode active material layer comprises a negative electrode material, wherein the negative electrode material comprises at least one of lithium titanate, silicon monoxide, graphite, silicon, or hard carbon.

7. The electrode according to claim 5, wherein the electrode satisfies at least one of the following conditions:

(f) compacted density $\rho_1$ of the negative electrode active material layer satisfies:

$$1.85 \text{ g/cm}^3 \geq \rho_1 \geq 0.65 \text{ g/cm}^3;$$

or

(g) thickness $h_1$ of the negative electrode active material layer on one side of the negative electrode current collector satisfies: $1500\ \mu\text{m} \geq h_1 \geq 15\ \mu\text{m}$.

8. The electrode according to claim 5, wherein the electrode satisfies at least one of the following conditions:

(h) compacted density $\rho_1$ of the negative electrode active material layer satisfies:

$$1.83 \text{ g/cm}^3 \geq \rho_1 \geq 1.0 \text{ g/cm}^3;$$

or

(i) thickness $h_1$ of the negative electrode active material layer on one side of the negative electrode current collector satisfies: $150\ \mu\text{m} \geq h_1 \geq 30\ \mu\text{m}$.

9. The electrode according to claim 1, wherein the electrode is a positive electrode, the current collector is a positive electrode current collector, the active material layer is a positive electrode active material layer, and the electrode satisfies at least one of the following conditions:

(j) compacted density $\rho_2$ of the positive electrode active material layer satisfies: $\rho_2 > 2 \text{ g/cm}^3$;

(k) thickness $h_2$ of the positive electrode active material layer on one side of the positive electrode current collector satisfies: $h_2 \geq 20\ \mu\text{m}$; or

(l) the positive electrode active material layer comprises a positive electrode material, wherein the positive electrode material comprises at least one of lithium iron phosphate, lithium nickel cobalt manganate, lithium manganate, lithium cobaltate, or lithium nickel cobalt aluminate.

10. The electrode according to claim 1, wherein the electrode is a positive electrode, the current collector is a positive electrode current collector, the active material layer is a positive electrode active material layer, and the electrode satisfies at least one of the following conditions:

(m) compacted density $\rho_2$ of the positive electrode active material layer satisfies:

$$4.25 \text{ g/cm}^3 \geq \rho_2 \geq 2.3 \text{ g/cm}^3;$$

or

(n) thickness $h_2$ of the positive electrode active material layer on one side of the positive electrode current collector satisfies: $1500\ \mu\text{m} \geq h_2 \geq 30\ \mu\text{m}$.

11. The electrode according to claim 1, wherein the electrode is a positive electrode, the current collector is a positive electrode current collector, the active material layer is a positive electrode active material layer, and the electrode satisfies at least one of the following conditions:

(o) compacted density $\rho_2$ of the positive electrode active material layer satisfies:

$$4.23 \text{ g/cm}^3 \geq \rho_2 \geq 4.0 \text{ g/cm}^3;$$

or

(p) thickness $h_2$ of the positive electrode active material layer on one side of the positive electrode current collector satisfies: 130 $\mu$m $\geq h_2 \geq$ 26 $\mu$m.

12. The electrode according to claim 1, wherein the active material layer comprises a conductive agent and satisfies at least one of the following:

(q) a mass percentage of the conductive agent in the first region is represented by B, and a mass percentage of the conductive agent in the second region is represented by A, A is greater than B;

(r) a mass percentage of the conductive agent in the first region is represented by B, and a mass percentage of the conductive agent in the second region is represented by A, satisfying (A - B)B $\geq$ 20%;

(s) the conductive agent comprises at least one of carbon nanotubes, carbon fiber, acetylene black, graphene, Ketjen black, or conductive carbon black; or

(t) based on a total mass of the active material layer, a mass percentage of the conductive agent in the active material layer is 0% to 2%.

13. The electrode according to claim 1, wherein the first region comprises a polymer compound and satisfies at least one of the following:

(u) the polymer compound comprises at least one of polyethylene oxide, polypropylene oxide, polyvinylidene fluoride, polytetrafluoroethylene, polyacrylonitrile, polyimide, polysiloxane, polyacrylic acid, polypropylene derivative, sodium carboxymethyl cellulose, lithium carboxymethyl cellulose, polymethylpyrrolidone, polyvinylpyrrolidone, styrene acrylate, or styrene butadiene rubber; or

(v) a mass percentage of the polymer compound in the active material layer is 0.42% to 14%.

14. The electrode according to claim 1, wherein the first region comprises a polymer compound, and a mass percentage of the polymer compound in the active material layer is 2.0% to 5.0%.

15. A method of preparing the electrode according to any one of claims 1 to 14, the method comprising:

applying a slurry of an active material layer on at least one surface of a current collector, and performing drying and cold pressing to obtain an initial electrode; and
performing a treatment on the initial electrode to obtain the electrode;
wherein the performing the treatment on the initial electrode comprises:

performing a plasma treatment on the initial electrode in a vacuum environment, wherein a plasma power is 0.5 kW to 5 kW, a gas source comprises at least one of nitrogen, argon, or carbon tetrafluoride, a gas flow rate is 3000 sccm to 5000 sccm, a temperature is 20°C to 60°C, and a treatment time is 0.5 min to 1 min; or
performing a heat treatment on the initial electrode in a vacuum or inert gas environment, wherein a heat treatment temperature is higher than 200°C, and a heat treatment time is 1 min to 3 min; or
performing a laser ablation on the initial electrode in a vacuum or an inert gas environment, wherein a laser intensity is 30 W to 100 W, and a treatment time is 0.5s to 1s.

16. A preparation method of the electrode according to any one of claims 1 to 14, comprising:

applying a slurry of an active material layer on at least one surface of a current collector, and performing drying and cold pressing to obtain an initial electrode; and
performing treatment on the initial electrode to obtain the electrode;
wherein the performing treatment on the initial electrode comprises:
performing heat treatment on the initial electrode in a vacuum or inert gas environment, wherein a heat treatment temperature is 350°C to 600°C, and a heat treatment time is 1 min to 3 min.

**17.** An electrochemical apparatus, comprising an electrode; wherein

the electrode is the electrode according to any one of claims 1 to 14; or
the electrode is an electrode prepared by using the preparation method according to claim 15 or 16.

**18.** An electronic apparatus, comprising the electrochemical apparatus according to claim 16.

FIG. 1

## INTERNATIONAL SEARCH REPORT

| International application No. |
|---|
| **PCT/CN2021/130627** |

| **A.** | **CLASSIFICATION OF SUBJECT MATTER** |
|---|---|

H01M 4/13(2010.01)i;  H01M 10/0525(2010.01)i

According to International Patent Classification (IPC) or to both national classification and IPC

| **B.** | **FIELDS SEARCHED** |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; WOTXT; USTXT; EPTXT; CNKI: 电极, 负极, 阳极, 正极, 阴极, 粘结剂, 热重, 表面, 热处理, 惰性, electrode, negative electrode, anode, positive electrode, cathode, binder, thermogravimetric, TG, surface, thermal treatment, inert

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 104393238 A (JIANGXI XIAN CAI NANOFIBERS TECHNOLOGY CO., LTD.) 04 March 2015 (2015-03-04) description, paragraphs 1-82 | 1-18 |
| X | CN 101572330 A (PANASONIC CORP.) 04 November 2009 (2009-11-04) description, p. 4, line 9 to p. 15, line 7 | 1-18 |
| A | CN 109546103 A (BEIJING UNIVERSITY OF CHEMICAL TECHNOLOGY) 29 March 2019 (2019-03-29) entire document | 1-18 |
| A | US 2012244428 A1 (SAMSUNG SDI CO., LTD.) 27 September 2012 (2012-09-27) entire document | 1-18 |
| A | WO 2021189339 A1 (NINGDE AMPEREX TECHNOLOGY LTD.) 30 September 2021 (2021-09-30) entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 July 2022** | **22 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/130627**

| Patent document cited in search report | | | Publication date (day/month/year) | Patent family member(s) | | | Publication date (day/month/year) |
|---|---|---|---|---|---|---|---|
| CN | 104393238 | A | 04 March 2015 | CN | 104393238 | B | 11 January 2017 |
| CN | 101572330 | A | 04 November 2009 | US | 2009274951 | A1 | 05 November 2009 |
| | | | | JP | 2009266761 | A | 12 November 2009 |
| | | | | JP | 5264271 | B2 | 14 August 2013 |
| CN | 109546103 | A | 29 March 2019 | | None | | |
| US | 2012244428 | A1 | 27 September 2012 | KR | 20120109080 | A | 08 October 2012 |
| | | | | KR | 101256067 | B1 | 18 April 2013 |
| | | | | US | 9853291 | B2 | 26 December 2017 |
| WO | 2021189339 | A1 | 30 September 2021 | | None | | |

Form PCT/ISA/210 (patent family annex) (January 2015)